# EUROPÄISCHE PATENTSCHRIFT

(11) **EP 3 743 704 B1**
(45) Veröffentlichungstag und Bekanntmachung des Hinweises auf die Patenterteilung: **29.06.2022**
(21) Anmeldenummer: 19714121.1
(22) Anmeldetag: 12.03.2019
(51) Int. Cl.: G01N 1/04, B23D 61/02, B26D 1/44, B26D 3/10, B26D 3/11, B26D 5/00, B26D 5/08, B26D 1/00

(54) **VERFAHREN UND VORRICHTUNG ZUR ENTNAHME EINER PROBE SOWIE VERWENDUNG EINER SOLCHEN VORRICHTUNG**
METHOD AND DEVICE FOR TAKING A SAMPLE, AND USE OF A DEVICE OF THIS TYPE
PROCÉDÉ ET DISPOSITIF POUR PRÉLEVER UN ÉCHANTILLON ET UTILISATION D'UN TEL DISPOSITIF

(30) Priorität: 22.03.2018 DE 102018204402
(43) Veröffentlichungstag der Anmeldung: 02.12.2020
(73) Patentinhaber: Siemens Energy Global GmbH & Co. KG, 81739 München (DE)
(72) Erfinder: CLOSSEN-VON LANKEN SCHULZ, Michael, 47661 Issum (DE); LEGENBAUER, Markus, 45279 Essen (DE); SCHLÜTER, Dennis, 46499 Hamminkeln (DE)
(86) Internationale Anmeldenummer: PCT/EP2019/056166
(87) Internationale Veröffentlichungsnummer: WO 2019/179828

(56) Entgegenhaltungen:
- CN-A- 1 457 968
- CN-A- 106 353 123
- GB-A- 2 282 778
- JP-A- H01 267 433
- US-A- 4 845 896
- US-A- 5 984 766
- US-A1- 2012 266 733

## Beschreibung

Die Erfindung betrifft eine Vorrichtung zur Entnahme einer Probe aus einem Festkörper durch Herausschneiden und die Verwendung einer solchen Vorrichtung. Darüber hinaus betrifft die Erfindung ein Verfahren zur Entnahme einer Probe aus einem Festkörper durch Herausschneiden.

Der Anmelderin ist bekannt, dass aus Festkörpern, bei denen es sich beispielsweise um im Betrieb gewesene Komponenten einer Gasturbine oder auch beliebige andere Bauteile bzw. Körper handeln kann, Proben entnommen werden, um diese anschließend zu analysieren. Rein beispielhaft sei die Entnahme einer Probe aus einem metallischen Festkörper zur anschließenden metallographischen Analyse genannt.

Proben aus einem Festkörper können erhalten werden, indem ein in der Regel vergleichsweise kleiner Teil des zu untersuchenden Körpers etwa durch Schneiden vom verbleibenden Abschnitt abgetrennt wird. Die erhaltene Probe kann dann einer Analyse unterzogen werden.

Damit eine durch Schneiden entnommene Probe repräsentativ ist, insbesondere den tatsächlichen Zustand der zu untersuchenden Komponente wiederspiegelt, sind Gefüge-Veränderungen etwa in Folge thermischer Beeinträchtigungen durch den Trennprozess bei der Probenentnahme unzulässig.

Die US 2012/266733 A1 offenbart eine Vorrichtung zur Entnahme einer Probe aus einem Festkörper durch Herausschneiden mit einem als ellipsoiden Hohlkörper ausgebildeten Schneidwerkzeug.

Weitere Probenentnahmevorrichtungen mit ellipsoiden Schneidwerkzeugen bzw. Schneidwerkzeugen, die zumindest im Wesentlichen die Form eines Hohlkugelsegmentes oder einer Hohlkugelschicht aufweisen, gehen aus der US 4 845 896 A, JP H01267433 A, US 5 984 766 A, CN 106 353 123 A und CN 1 457 968 A hervor.

Es ist daher Aufgabe der vorliegenden Erfindung eine Vorrichtung zur Entnahme einer Probe aus einem Festkörper anzugeben, mit der auf vergleichsweise einfache Weise und zügig eine repräsentative, insbesondere durch den Entnahmeprozess nicht bzw. so wenig wie möglich beeinflusste Probe entnommen werden kann.

Diese Aufgabe wird durch die Vorrichtung gemäß Anspruch 1 gelöst. Die Vorrichtung zur Entnahme einer Probe aus einem Festkörper durch Herausschneiden umfasst ein Gestell und ein an dem Gestell relativ zu diesem bewegbar gehaltenes Schneidwerkzeug, wobei das Schneidwerkzeug zumindest abschnittsweise zumindest im Wesentlichen die Form eines Hohlkugelsegmentes oder einer Hohlkugelschicht aufweist.

Die Anmelderin hat festgestellt, dass ein Schneidwerkzeuges, das die Form eines Segmentes oder einer Schicht einer Hohlkugel aufweist, hervorragend geeignet ist, um auf einfache und zügige Weise Proben aus etwa metallischen Festkörpern zu entnehmen, wobei aufgrund der besonderen Form des Schneidwerkzeugs Gefüge-Veränderungen etwa in Folge thermischer Einwirkung, vermieden bzw. auf einem Minimum gehalten werden können.

Das erfindungsgemäße Schneidwerkzeug kann zur Probenentnahme praktisch wie eine dreidimensionale Kreissäge in einen Festkörper eingetrieben werden, wobei eine kugelförmige Schnittkontur erhalten wird. Dies hat sich als ein besonders geeigneter und Gefüge-erhaltender Trennprozess erwiesen.

Unter einem Hohlkugelsegment ist dabei in herkömmlicher Weise eine solche Form zu verstehen, die erhalten wird, wenn eine Hohlkugel, die auch als Kugelschale bezeichnet werden kann, von einer Ebene geschnitten wird. Eine Hohlkugelschicht ist diejenige Form, die sich zwischen zwei parallelen Ebenen ergibt, die eine Hohlkugel schneiden.

Das Schneidwerkzeug kann beispielsweise in einem zentralen Bereich insbesondere für eine geeignete Befestigung an einem Werkzeughalter plattenförmig sein, und an den plattenförmigen Abschnitt schließt sich ein Abschnitt an, der die Form einer Hohlkugelschicht aufweist und die Schneide bildet.

Das Schneidwerkzeug der erfindungsgemäßen Vorrichtung ist zur Realisierung einer Schneidbewegung um eine Werkzeugdrehachse rotierbar gelagert. Die Werkzeugdrehachse fällt insbesondere mit derjenigen Achse zusammen, in Bezug auf die das hohlkugelsegment- oder hohlkugelscheibenförmige Schneidwerkzeug bzw. der hohlkugelsegment- oder hohlkugelscheibenförmige Abschnitt des Schneidwerkzeuges rotationssymmetrisch ist.

Das Schneidwerkzeug ist weiterhin bevorzugt zumindest abschnittsweise mit kubischem Bornitrid beschichtet, insbesondere, um die Verschleißbeständigkeit zu erhöhen.

In weiterer besonders vorteilhafter Ausführungsform weist das Schneidwerkzeug eine Mehrzahl von Ausnehmungen auf, die sich insbesondere von seinem Außenumfang radial nach innen erstrecken und/oder entlang seines Außenumfanges verteilt und bevorzugt äquidistant voneinander beabstandet sind. Die Ausnehmungen, die beispielsweise eine U-förmige Kontur haben, dienen insbesondere einem besseren Spanabtransport während eines Schneidvorgangs.

Zur Realisierung der Rotationsbewegung des Schneidwerkzeuges um die Werkzeugdrehachse ist bevorzugt eine Dreh- Antriebseinrichtung vorgesehen. Diese kann in bevorzugter Ausgestaltung eine Spindel und/oder einen bürstenlosen Gleichstrommotor umfassen. Der motorisierte Antrieb der Rotationsbewegung des Schneidwerkzeuges erfüllt weiterhin bevorzugt die Anforderungen der Schutzklasse III gemäß DIN EN61140, ist also bevorzugt durch einen Antrieb mit Schutzkleinspannung gegeben.

In weiterer besonders bevorzugter Ausgestaltung ist die Anordnung ferner derart getroffen, dass die Lage der Werkzeugdrehachse relativ zu dem Gestell veränderbar ist.

Die Anordnung ist insbesondere derart getroffen, dass das Schneidwerkzeug auf einer Kugeloberfläche bewegbar ist, deren Radius bevorzugt einem zu dem hohlkugelsegment- oder hohlkugelscheibenförmige Schneidwerkzeug bzw. hohlkugelsegment- oder hohlkugelscheibenförmigen Abschnitt des Schneidwerkzeuges gehörigen Kugelradius entspricht. Ein Hohlkugelsegment definiert einen inneren und äußeren Radius, wobei auf beide Radien gleichermaßen abgestellt werden kann. Das Schneidwerkzeug ist insbesondere mit zwei Freiheitsgraden auf der Kugeloberfläche bewegbar.

Dann ist eine zweiachsige Vorschubbewegung auf einer Kugeloberfläche möglich, beispielsweise sowohl in horizontaler aus auch in vertikaler Richtung. Durch eine zweiachsige Vorschubbewegung kann insbesondere ein gleichbleibendes Spanvolumen über den gesamten Probenquerschnitt bei nahezu vernachlässigbarem Wärmeeintrag in die Probe erhalten werden.

Das Schneidwerkzeug ist zur Realisierung einer Vorschubbewegung um eine in Bezug auf das Gestell bevorzugt ortsfeste Vorschubachse schwenkbar an dem Gestell gelagert. Das Schneidwerkzeug ist zur Realisierung einer Hubbewegung um eine zu der Vorschubbewegung orthogonale Hubachse schwenkbar an dem Gestell gelagert. Die Hubachse kann in Bezug auf das Gestell in ihrer Lage veränderbar sein. Auch kann das Schneidwerkzeug höhenverstellbar an dem Gestell gelagert sein.

Die Vorschubachse und die Hubachse schneiden sich in besonders bevorzugter Ausgestaltung in dem zu dem hohlkugelsegment- oder hohlkugelscheibenförmigen Schneidwerkzeug bzw. dem hohlkugelsegment- oder hohlkugelscheibenförmigen Abschnitt des Schneidwerkzeuges gehörigen Kugelmittelpunkt. Zu jedem Hohlkugelsegment bzw. jeder Hohlkugelschicht gegebener Größe gehört ein definierter Kugelmittelpunkt, auf den Bezug genommen werden kann.

Die Vorschubachse kann beispielsweise vertikal ausgerichtet sein, während sich die Hubachse durch eine - bevorzugt veränderbare-, jedoch immer in der horizontalen Ebene befindlichen Lage auszeichnet.

Für die Rotationsbewegung des Schneidwerkzeuges um die Vorschubachse ist eine Vorschub-Antriebseinrichtung insbesondere mit einem Schrittmotor und/oder einem Schneckengetriebe vorgesehen.

In analoger Weise kann für die Schwenkbewegung des Schneidwerkzeugs um die Hubachse eine Hub-Antriebseinrichtung insbesondere mit einem bevorzugt einen Schrittmotor umfassenden Linearantrieb und/oder einem Planetengetriebe vorgesehen sein. Die Hub-Antriebseinrichtung umfasst dann bevorzugt ein linear herein- und herausfahrbares Stellelement, das gelenkig mit einem das Schneidwerkzeug tragenden Werkzeughalter verbunden ist, wobei das Stellelement bevorzugt um eine Hub-Antriebsschwenkachse schwenkbar gelagert ist. Es kann auch vorgesehen sein, dass die das Stellelement umfassende Hub-Antriebseinrichtung um eine Hub-Antriebsschwenkachse schwenkbar gelagert ist.

Auch für einen Antrieb für die Schwenkbewegung des Schneidwerkzeugs um die Vorschubachse und/oder für einen Antrieb für die Schwenkbewegung um die Hubachse gilt, dass diese die Anforderungen gemäß Schutzklasse III nach DIN EN 61140 erfüllen. Besonders bevorzugt wird für sämtliche Antriebe und Vorschübe konsequent die Schutzkleinspannung verwendet.

Als besonders bevorzugt für die Probenentnahme, etwa im Turbinenbereich, hat sich ferner ein Schneidwerkzeug erwiesen, für dessen Größe gilt, dass der Radius, der zu dem hohlkugelsegment- oder hohlkugelscheibenförmigen Schneidwerkzeug bzw. dem hohlkugelsegment- oder hohlkugelscheibenförmige Abschnitt gehört im Bereich von 40mm bis 100mm, insbesondere 50mm bis 80mm, besonderes bevorzugt 65mm bis 75mm liegt. Der maximale Durchmesser des hohlkugelsegment- oder hohlkugelscheibenförmigen Schneidwerkzeuges bzw. des hohlkugelsegment- oder hohlkugelscheibenförmige Abschnitts dieses liegt bevorzugt unterhalb von 100mm.

Die erfindungsgemäße Vorrichtung umfasst in weiterer besonders bevorzugter Ausführungsform einen Haltekörper, an dem das Schneidwerkzeug bewegbar gehalten ist. Ist ein Haltekörper vorgesehen, kann dieser zur Realisierung der Vorschubbewegung um die Vorschubachse, die bevorzugt mit einer zentralen Längsachse des Haltekörpers zusammenfällt, rotierbar an dem Gestell der Vorrichtung gelagert sein, was sich als besonders geeignete konstruktive Umsetzung erwiesen hat. Das Schneidwerkzeug kann alternativ oder zusätzlich an dem Haltekörper um die Hubachse schwenkbar gelagert sein, um die Hubbewegung zu ermöglichen. Der Haltekörper kann ferner höhenverstellbar an dem Gestell gelagert sein, so dass die Höhe des Schneidwerkzeuges einstellbar ist.

Der Haltekörper kann beispielsweise einen bevorzugt zumindest im Wesentlichen zylinderförmigen Antriebsabschnitt aufweisen, der um seine zentrale Längsachse drehbar an dem Gestell gehalten ist. Alternativ oder zusätzlich kann der Antriebsabschnitt außenseitig mit Zähnen versehen sein, von denen einige mit einer an dem Gehäuse um ihre Längsachse rotierbar gelagerten, motorisiert antreibbaren Schnecke in Eingriff stehen. In diesem Falle bildet der bevorzugt zylinderförmige Antriebsabschnitt das Schneckenrad eines Schneckengetriebes, das in Drehung versetzt wird, wenn die schrauben- bzw. spindelförmige Schnecke des Schneckengetriebes motorisiert um ihre Längsachse rotiert wird.

Der Haltekörper kann weiterhin alternativ oder zusätzlich einen Aufnahmeabschnitt umfassen, der sich zumindest abschnittsweise durch einen kugelförmige Außen- und/oder Innenkontur auszeichnet, besonders bevorzugt durch eine kugelförmige Außen- und Innenkontur in der Art eines Hohlkugelsegmentes. In dem Aufnahmeabschnitt ist dann bevorzugt ein das Schneidwerkzeug tragender Werkzeughalter und/oder ein Antrieb für die Rotationsbewegung des Schneidwerkzeuges um die Werkzeugdrehachse angeordnet. Der Aufnahmeabschnitt kann eine Öffnung aufweisen und das Schneidwerkzeug ist dann bevorzugt im Bereich der Öffnung angeordnet.

Um die erfindungsgemäße Vorrichtung besonders bequem und zuverlässig vorübergehend an einem Festkörper für eine Probenentnahme fixieren zu können, kann diese Füße, beispielsweise drei Füße aufweisen, die bevorzugt ein- und ausschaltbare Magnete umfassen. Alternativ oder zusätzlich kann für den Fall, dass Probeentnahmen aus paramagnetischen Werkstoffen durchzuführen sind, vorgesehen sein, dass die Füße und/oder das Gestell Aufnahmen für Spanngurte aufweisen. Weiterhin bevorzugt sind die Füße gelenkig, insbesondere über Radial-Gelenklager, mit dem Gestell der Vorrichtung verbunden.

Die Füße können herein- und herausdrehbar an dem Gestell befestigt sein, wodurch eine Höhenverstellbarkeit des Gestells und somit des daran gehaltenen Schneidwerkzeuges erzielt werden kann.

In Weiterbildung der Vorrichtung ist ein einseitig offenes Gehäuse vorgesehen. Alternativ oder zusätzlich kann die Vorrichtung eine Absaugeinrichtung umfassen bzw. einen Anschluss, über den insbesondere ein Gehäuseabschnitt mit einer Absaugeinrichtung verbindbar ist. Über eine Absaugeinrichtung können in Folge des Schneidprozesses anfallende Späne zuverlässig entfernt werden. Beispielsweise kann das Gehäuse mit einem insbesondere seitlichen Anschluss versehen sein, der mit einem Schlauch einer Absaugeinrichtung verbindbar ist. Ist ein Gehäuse vorhanden, ist dieses bevorzugt derart ausgestaltet, dass es einen insbesondere unterseitig an der Vorrichtung vorgesehenen Bearbeitungsbereich umgreift bzw. umschließt, also kapselt. Eine gekapselte Bauart - insbesondere in Kombination mit einer Absaugeinrichtung - ermöglicht besonders saubere Probeentnahmen, so dass die erfindungsgemäße Vorrichtung sich etwa auch für einen Einsatz in einem Reinraum eignet.

Besonders bevorzugt umfasst die erfindungsgemäße Vorrichtung ein über ein Rapid-Prototyping-Verfahren hergestelltes Gestell und/oder Gehäuse, insbesondere aus Kunststoff.

In weiterer besonders vorteilhafter Ausgestaltung der erfindungsgemäßen Vorrichtung ist eine Steuereinrichtung vorgesehen, die bevorzugt wenigstens einen Mikroprozessor umfasst. Die Steuereinrichtung ist insbesondere mit einem Antrieb für die Rotationsbewegung des Schneidwerkzeuges um die Werkzeugdrehachse und/oder einem Antrieb für die Schwenkbewegung des Schneidwerkzeugs um die Hubachse und/oder einem Antrieb für die Rotationsbewegung des Haltekörpers um die Vorschubachse, besonders bevorzugt mit allen drei Antrieben, verbunden. Sie ist ferner besonders bevorzugt derart ausgebildet und eingerichtet, dass eine Probe vollautomatisiert aus einem Festkörper entnehmbar ist, dies zweckmäßiger Weise nachdem die Vorrichtung - etwa von Hand und/oder mit geeigneten Hilfsmitteln - bestimmungsgemäß an einem Festkörper für eine Probenentnahme angeordnet und bevorzugt vorübergehend fixiert wurde.

Die vollautomatisierte Ausgestaltung ermöglicht insbesondere die Entnahme von Proben auch an unzugänglichen Stellen. Nach dem Positionieren der Vorrichtung kann diese autark gesteuert mit der Entnahme von Proben beginnen.

Die erfindungsgemäße Vorrichtung umfasst in Weiterbildung einen oder mehrere Sensoren, insbesondere zur Überwachung von Außenparameter und/oder Zuständen von vorhandenen Antrieben. Ist einer oder sind mehrere Sensoren vorhanden, kann es sich beispielsweise um einen bzw. solche handeln, der bzw. die für die Erfassung einer Temperatur, Schallemission, Stromaufnahme und/oder Drehzahl vorhandener Motoren ausgebildet ist bzw. sind.

Ist einer oder sind mehrere Sensoren vorhanden, sind diese weiterhin bevorzugt mit einer Steuereinrichtung der erfindungsgemäßen Vorrichtung verbunden, so dass die Sensoren kontinuierlich bzw. wiederholend in vorgegebenen zeitlichen Abständen erfasste Messwerte an diese übermitteln können. Die Steuereinrichtung kann dann dazu ausgebildet sein, erhaltene Messwerte zu analysieren und auf Basis dieser optimale Prozessparameter zu ermitteln, die wiederum etwa an vorhandene Antriebe zurückzugeben werden, insbesondere, um den Schneidalso Entnahmevorgang entsprechend ideal zu steuern.

Auch kann wenigstens eine Kamera vorgesehen sein, um einen Probenentnahmeprozess - auch aus Entfernung - beobachten zu können.

Weiterhin bevorzugt umfasst die Vorrichtung einen oder mehrere Encoder, also Wegaufnehmer, der/die ausgebildet und angeordnet ist/sind, um die aktuelle Position des Schneidwerkzeuges zu erfassen. Sind mehrere Antriebe für eine Bewegung des Schneidwerkzeuges vorgesehen, ist bevorzugt für jeden Antrieb wenigstens ein Encoder vorgesehen und dem jeweiligen Antrieb zugeordnet. Die Verwendung von Encodern, über welche die Position insbesondere sämtlicher Achsen erfasst werden kann, ermöglicht u.a. das wiederholte Abfahren beliebiger Konturen.

Es hat sich gezeigt, dass unter Verwendung der erfindungsgemäßen Vorrichtung der im Rahmen einer Probenentnahme aus einem Festkörper auftretende Wärmeeintrag derart gering ist, dass eine Kühlung nicht zwingend erforderlich ist. Um dennoch die Möglichkeit für eine solche zu haben, kann die erfindungsgemäße Vorrichtung in Weiterbildung Mittel zum Kühlen, beispielsweise Mittel zur Zufuhr eines Kühlmediums umfassen.

Die erfindungsgemäße Vorrichtung hat sich als besonders geeignet erwiesen, um im Rahmen eines Turbinenservices bzw. einer Turbinenrevision Proben zu entnehmen. Die entnommenen Proben können dann etwa der Bestimmung von Materialeigenschaften bzw. -Schädigungen, wie z.B. Kriechen, dienen. Die Proben können alternativ oder zusätzlich auch in Zugversuchen, Zeitstandversuchen oder anderen Versuchen herangezogen werden, über welche die Materialeigenschaften nach dem Betrieb der Werkstoffe, also im Anschluss insbesondere an thermische und/oder mechanische Belastungen, ermittelt werden können.

Ein weiterer Gegenstand der vorliegenden Erfindung ist ein Verfahren zur Entnahme einer Probe aus einem Festkörper durch Herausschneiden, bei dem
- eine Vorrichtung nach einem der vorhergehenden Ansprüche bereitgestellt wird,
- die Vorrichtung an geeigneter Stelle des Festkörpers angeordnet und insbesondere vorrübergehend fixiert wird, und
- mittels des Schneidwerkzeugs eine Probe aus dem Festkörper entnommen wird, wobei ein Schnitt mit einer kugelsegmentförmigen Kontur in dem Festkörper hergestellt wird.

Unter Durchführung des erfindungsgemäßen Verfahrens unter Verwendung der erfindungsgemäßen Vorrichtung können auf vergleichsweise einfache Weise und vergleichsweise zügig repräsentative Festkörperproben erhalten werden, die für eine weitere Analyse und Zustandsbestimmung besonders geeignet sind.

Schließlich betrifft die Erfindung die Verwendung einer erfindungsgemäßen Vorrichtung zur Entnahme einer Probe aus einem Festkörper durch Herausschneiden. Bei einem Festkörper, aus dem eine Probe entnommen wird, kann es sich beispielsweise um im Betrieb gewesene Komponenten einer Gasturbine oder auch beliebige andere Bauteile bzw. Körper handeln.

Weitere Merkmale und Vorteile der vorliegenden Erfindung werden anhand der nachfolgenden Beschreibung dreier Ausführungsformen einer erfindungsgemäßen Vorrichtung unter Bezugnahme auf die beiliegende Zeichnung deutlich.

Darin ist
- Figur 1: eine perspektivische Ansicht einer ersten Ausführungsform einer erfindungsgemäßen Vorrichtung von schräg oben in schematischer Darstellung;
- Figur 2: eine perspektivische Ansicht der Vorrichtung aus Figur 1 von schräg unten in schematischer Darstellung;
- Figur 3: eine teilweise geschnittene perspektivische Ansicht der Vorrichtung aus Figur 1 in schematischer Darstellung;
- Figur 4: eine perspektivische Ansicht einer zweiten Ausführungsform einer erfindungsgemäßen Vorrichtung von schräg unten in schematischer Darstellung;
- Figur 5: eine teilweise geschnittene perspektivische Ansicht der Vorrichtung aus Figur 4 in schematischer Darstellung;
- Figur 6: eine weitere teilweise geschnittene perspektivische Ansicht der Vorrichtung aus Figur 4 in schematischer Darstellung;
- Figur 7: eine teilweise geschnittene perspektivische Ansicht einer dritten Ausführungsform einer erfindungsgemäßen Vorrichtung von der Seite in schematischer Darstellung;
- Figur 8: eine weitere teilweise geschnittene perspektivische Ansicht der Vorrichtung aus Figur 7;
- Figur 9: das Schneidwerkzeug der Vorrichtungen aus den Figuren 1, 4 und 7 im Horizontalschnitt zusammen mit einer Probenentnahmestelle in schematischer Darstellung;
- Figur 10: in schematischer Darstellung eine Frontalansicht auf das Schneidwerkzeug aus Figur 9, wobei der mit einem Festkörper zur Probenentnahme in Eingriff kommende Bereich markiert ist;
- Figur 11: das Schneidwerkzeug aus Figur 9 im Vertikalschnitt zusammen mit einer Probenentnahmestelle in schematischer Darstellung;
- Figur 12: ein elliptisches Schneidwerkzeug im Horizontalschnitt zusammen mit einer Probenentnahmestelle bei linearer Bearbeitungsrichtung schematischer Darstellung; und
- Figur 13: in schematischer Darstellung eine Frontalansicht auf das Schneidwerkzeug aus Figur 12, wobei der mit einem Festkörper zur Probenentnahme in Eingriff kommende Bereich markiert ist.

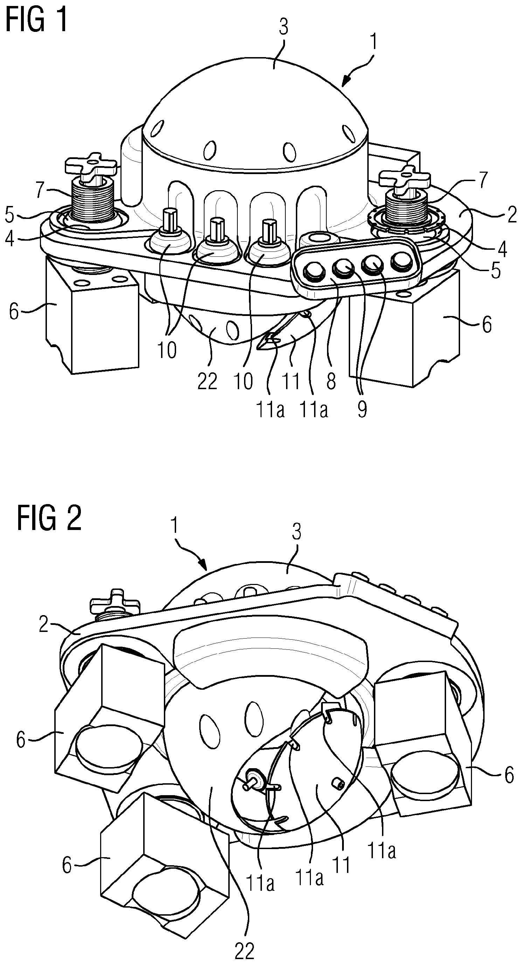

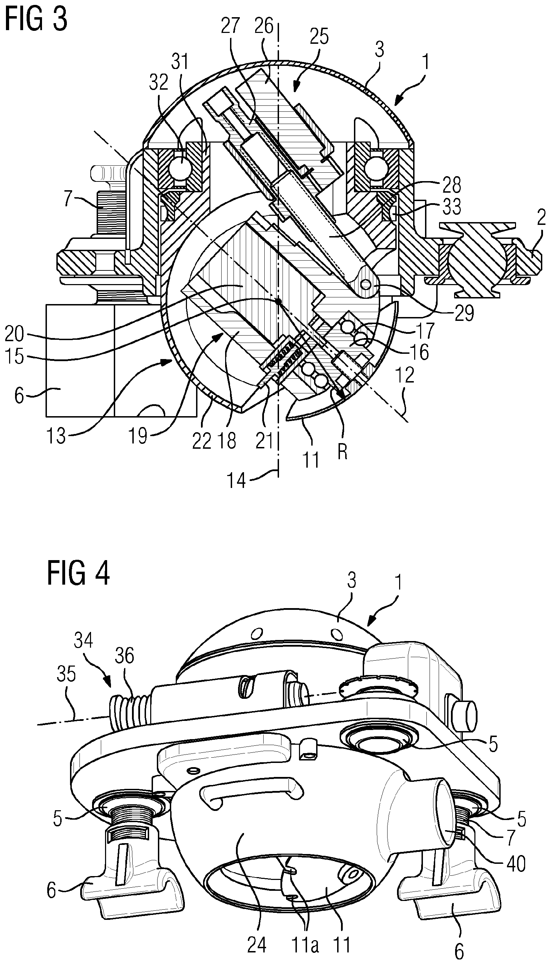

Die Figuren 1 und 2 zeigen in schematischer Darstellung perspektivische Außenansichten eines ersten Ausführungsbeispiels einer erfindungsgemäßen Vorrichtung zur Entnahme einer Probe aus einem Festkörper durch Herausschneiden jeweils von schräg oben bzw. schräg unten. In der Figur 3 ist die Vorrichtung schematisch in teilweise geschnittener Darstellung gezeigt, wobei das Innenleben der Vorrichtung erkennbar ist.

Die erfindungsgemäße Vorrichtung umfasst ein gleichzeitig al Gestell dienendes Gehäuse 1, welches unter Durchführung eines Rapid-Prototyping-Verfahrens, konkret durch 3D-Drucken, erhalten wurde und aus Kunststoff gefertigt ist. Das Gehäuse 1 umfasst einen zumindest im Wesentlichen plattenförmigen Gehäuseabschnitt 2 und einen sich daran oberseitig anschließenden kuppelförmigen Gehäuseabschnitt 3, welcher darunter befindliche Komponenten der Vorrichtung, auf die noch näher eingegangen wird, übergreift. In dem plattenförmigen Gehäuseabschnitt 2 sind drei Ausnehmungen 4 vorgesehen, in denen jeweils ein Radial-Gelenklager 5 angeordnet ist, wodurch insgesamt drei Füße 6 (vgl. insbesondere Figur 2) der Vorrichtung gelenkig an dem Gehäuse 1, konkret dem plattenförmigen Gehäuseabschnitt 2, befestigt sind. Jeder Fuß 6 umfasst einen ein- und ausschaltbaren Magneten, sodass eine vorübergehende, verlässliche Fixierung der Vorrichtung an Festkörpern aus ferromagnetischem Material zügig und bequem möglich ist. Jeder Fuß 6 ist über eine sich durch das jeweilige Radial-Gelenklager 5 erstreckende Gewindestange 6 an dem Gehäuse 1 gehalten. Durch Drehung der Gewindestangen 7 können die Füße 6 herein- und herausgedreht werden und so die Höhe des Gehäuses 1 in Bezug auf die Oberfläche eines Festkörpers, aus dem eine Probe zu entnehmen ist, verändert werden.

Ebenfalls gut in der Figur 1 erkennbar ist ein außenseitig an dem Gehäuse 1, konkret dem plattenförmigen Gehäuseabschnitt 2 angeformtes Bedienfeld 8 mit Knöpfen 9, über welche die Vorrichtung manuell bedienbar ist. Zur linken Seite des Bedienfeldes 8 befinden sich ferner drei Potentiometer 10 für Antriebe der Vorrichtung, auf die weiter unten noch eingegangen wird.

Um aus einem Festkörper eine Probe durch Herausschneiden entnehmen zu können, umfasst die Vorrichtung ein an ihrer Unterseite angeordnetes Schneidwerkzeug 11, das zumindest im Wesentlichen die Form eines Hohlkugelsegmentes aufweist. Das hohlkugelsegmentförmige Schneidwerkzeug 11 kann besonders gut den Figuren 2, 3, 9 und 11 entnommen werden. Das Schneidwerkzeug 11 weist eine Mehrzahl von U-förmigen Ausnehmungen 11a auf, die entlang seines Außenumfanges verteilt und äquidistant voneinander beabstandet sind und sich vom Außenumfang radial nach innen erstrecken. Die Ausnehmungen 11a, die nicht in allen Figuren dargestellt, aber insbesondere in den Figuren 1, 2 und 4 erkennbar sind, dienen in u.a. einem besseren Spanabtransport während eines Schneidvorganges. Das Schneidwerkzeug 11 ist mit kubischem Bornitrid (CBN) beschichtet, insbesondere, um die Verschleißbeständigkeit zu erhöhen.

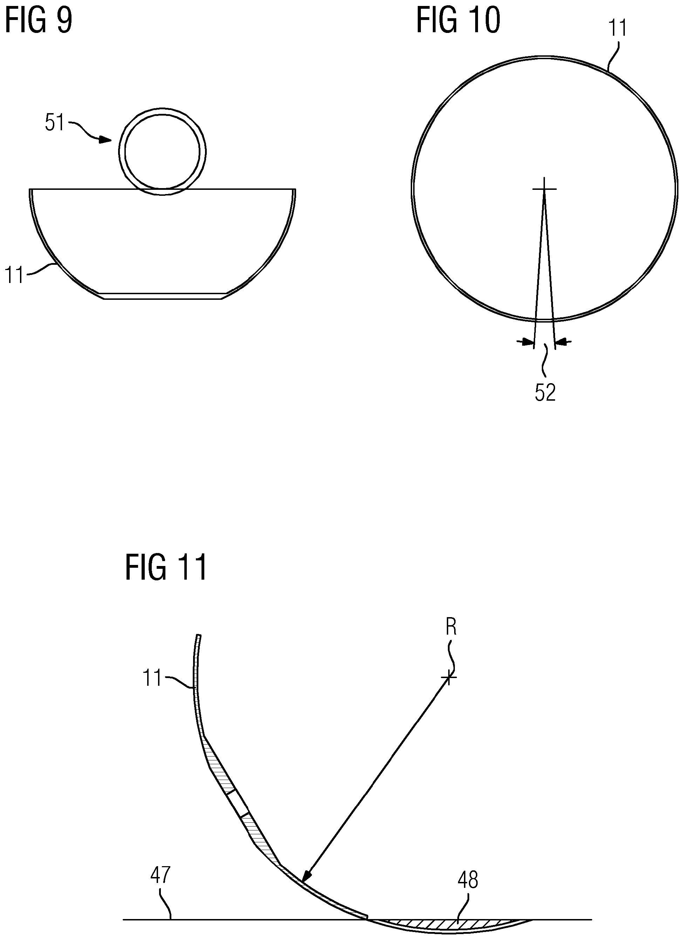

Das Schneidwerkzeug 11 ist um eine Werkzeugdrehachse 12 (vgl. Figur 3) rotierbar gelagert und zwar an einem Haltekörper 13 der Vorrichtung, der seinerseits zur Realisierung einer Vorschubbewegung des Schneidwerkzeuges 11 um eine in Bezug auf das Gehäuse 1 ortsfeste Vorschubachse 14 (vgl. insbesondere Figur 3) rotierbar an dem Gestell 1 gelagert ist. Das Schneidwerkzeug 11 ist an dem Haltekörper 13 ferner um eine Hubachse 15, die in Figur 3 senkrecht zur Zeichenebene steht, schwenkbar gehalten. Die Werkzeugdrehachse 12, Vorschubachse 14 und Hubachse 15 schneiden sich in dem zu dem hohlkugelsegmentförmigen Schneidwerkzeug 11 gehörigen Kugelmittelpunkt. Das Schneidwerkzeug 11 ist auf einer Kugeloberfläche bewegbar, deren Radius dem zu dem hohlkugelsegmentförmigen Schneidwerkzeug 11 gehörigen äußeren Kugelradius R entspricht. Der Radius R kann der Figur 3 und der Figur 9 entnommen werden, die einen vergrößerten Zentralschnitt des Schneidwerkzeugs 11 zeigt. Bei dem dargestellten Ausführungsbeispiel beträgt der Kugelradius 69mm. Durch den vergleichsweise großen Radius wird es möglich, einem Festkörper eine Probe mit vergleichsweise geringem Querschnitt zu entnehmen und die entstehende Schnittfläche weist nur eine äußerst geringe Kerbschärfe auf.

Konstruktiv sind die Bewegungsmöglichkeiten des Schneidwerkzeuges 11 wie folgt umgesetzt.

Das Schneidwerkzeug 11 ist an einer als Werkzeughalter dienenden Spindel 16 drehfest fixiert, die über Lager 17 um die Werkzeugdrehachse 12 rotierbar an einem Drehantriebs-Gehäuse 18 einer für die Rotation des Schneidwerkzeuges 11 um die Werkdrehachse 12 vorgesehenen Dreh-Antriebseinrichtung 19 gehalten ist. Die Dreh-Antriebseinrichtung 19 umfasst einen bürstenlosen Gleichstrommotor 20, über den die das Schneidwerkzeug 11 tragende Spindel 16 antreibbar ist. Um sicherzustellen zu können, dass sich die Spindel 16 und somit das Schneidwerkzeug 11 im unbenutzten Zustand der Vorrichtung nicht ungewollt dreht, ist eine Spindelarretierung 21 vorgesehen.

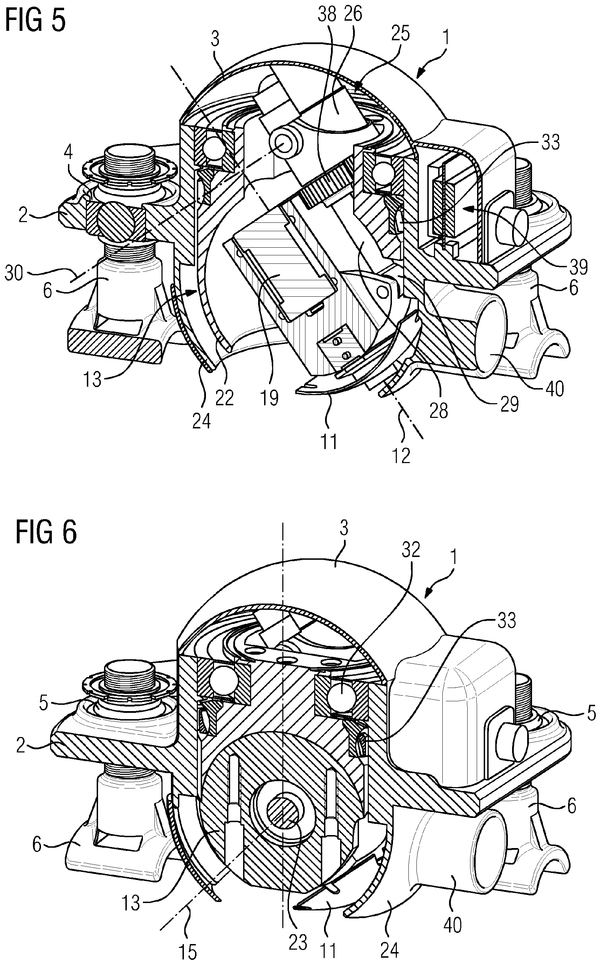

Für die Schwenkbewegung des Schneidwerkzeuges 11 um die Hubachse 15 ist das Drehantriebs-Gehäuse 18 um die Hubachse 15 (vgl. auch Figur 6) schwenkbar an dem Haltekörper 13 gelagert. Der Halterkörper 13 umfasst einen zumindest im Wesentlichen kugelsegmentförmigen Aufnahmeabschnitt 22, innerhalb dem sich das Drehantriebs-Gehäuse 18 erstreckt, und an dem es, konkret an zwei Stellen der Innenwandung schwenkbar gelagert. Eines der beiden zugehörigen Schwenklager 23 kann der Figur 6 entnommen werden, die einen Schnitt an entsprechender Position zeigt. Es sei angemerkt, dass die Figuren 4 bis 6 zwar eine zweite Ausführungsform einer erfindungsgemäßen Vorrichtung zeigen, die u.a. einen zusätzlichen unteren Gehäuseabschnitt 24 zur Kapselung des Bearbeitungsbereiches aufweist. Da die schwenkbare Lagerung des Schneidwerkzeuges 11 um die Hubachse 15 bei der zweiten Ausführungsform jedoch auf gleiche Weise realisiert ist, kann auf diese Figur Bezug genommen werden. Gleiche Komponenten sind darin mit gleichen Bezugszeichen versehen.

Um ein Schwenken des Schneidwerkzeuges 11 um die Hubachse 15 motorisiert bewirken zu können, ist eine in der Figur 3 erkennbare Hub-Antriebseinrichtung 25 mit einem einen Schrittmotor 26 umfassenden Linearantrieb vorgesehen. Mittels des Schrittmotors 26 kann eine Gewindehülse 27 der Hub-Antriebseinrichtung 25 in Rotation versetzt werden, was wiederum dazu führt, dass eine von dieser aufgenommene Gewindestange 28, deren vorderes Ende 29 gelenkig mit dem Drehantriebs-Gehäuse 18 verbunden ist (vgl. Figur 5), aus der Gewindehülse 27 heraus- oder hineingefahren wird, was in ein Schwenken des Drehantriebs-Gehäuses 18 und somit des Schneidwerkzeuges 11 um die Hubachse 15 resultiert. Der Schrittmotor 26, die Gewindehülse 27 und Gewindestange 28 sind schwenkbar an dem Haltekörper 13 gelagert, konkret um eine zu der Hubachse 15 parallele Schwenkachse 30 (vgl. Figur 5), so dass die Komponenten der Schwenkbewegung des Drehantriebs-Gehäuses 18 und somit Schneidwerkzeugs 11 folgen können.

Für die Realisierung einer Vorschubbewegung des Schneidwerkzeugs 11 ist der Haltekörper 13, wie erwähnt, um die in Bezug auf das Gehäuse 1 ortsfeste Vorschubachse 14 (Figur 3) rotierbar an dem Gestell 1 gelagert. Hierzu umfasst der Haltekörper 13 einen oberen, zumindest im wesentlichen zylinderförmigen Antriebsabschnitt 31, der um seine mit der Vorschubachse 14 zusammenfallende, zentrale Zylinderachse drehbar an dem Gehäuse 1, konkret innerhalb des kuppelförmigen Gehäuseabschnitts 3 gehalten ist, wofür ein Lager 32 vorgesehen ist (vgl. Figur 2, 5 und 6). Der Antriebsabschnitt 31 ist außenseitig mit Zähnen 33 versehen und bildet das "Schneckenrad" eines Schneckengetriebes einer Vorschub-Antriebseinrichtung 34 der Vorrichtung. Die Vorschub-Antriebseinrichtung 34 weist eine an dem Gehäuse 1 um eine Schnecken-Drehachse 35 rotierbar gelagerte, mittels eines in den Figuren nicht erkennbaren Schrittmotors motorisiert antreibbaren, in Form einer Gewindestange gegebene Schnecke 36 auf, die mit Zähnen 33 an dem Antriebsabschnitt 31 in Eingriff steht. Wird die Schnecke 36 in die eine oder die andere Richtung um ihre Längsachse rotiert, resultiert hieraus eine Rotation des Haltekörpers 13 um die Vorschubachse 14 in die eine oder andere Drehrichtung und somit eine Vorschubbewegung des Schneidwerkzeuges 11 in Umfangsrichtung. Es sei angemerkt dass, da die in den Figuren nicht dargestellten Zuleitungen zu den dann mit rotierenden Motoren 19 und 26 von der Dreh- 19 und der Hub-Antriebseinrichtung 25 bei dem dargestellten Ausführungsbeispiel keine Schleifkontakte umfassen, der Haltekörper 13 immer maximal um 360° in eine Drehrichtung um die Vorschubachse 14 gedreht und dann die Drehrichtung umgekehrt wird.

Die Motoren der drei Antriebseinrichtungen 19, 25, 34 können über die Knöpfe 9 auf dem Bedienfeld 8 von einem Benutzer betätigt werden (etwa an/aus und/oder vor/zurück). Über die Potentiometer 10 kann die jeweilige Drehgeschwindigkeit variiert werden.

Für die Motoren aller drei Antriebseinrichtungen 19, 25, 34 gilt, dass sie die Anforderungen der Schutzklasse III gemäß DIN EN61140 erfüllen, es sich also um Antrieb mit Schutzkleinspannung handelt. Alle drei Motoren sind vorliegend Schrittmotoren. Encoder für die Erfassung der aktuellen Position des Schneidwerkzeuges 11 sind entsprechend nicht erforderlich, können aber zusätzlich vorgesehen sein.

Für die Dreh-Antriebseinrichtung 19 gilt bei dem dargestellten Ausführungsbespiel, dass die Spannungsversorgung für den Motor 20 24V/3.5 A beträgt, das Drehmoment bei etwa 0,4 Nm liegt und die Drehzahlregelung bevorzugt bei etwa 4000 1/min. Für den Motor 26 der Hub-Antriebseinrichtung 25 gilt, dass das Haltemoment bei etwa 0,35 Nm liegt und das Drehmoment bei etwa 2,00 Nm. Es lässt sich eine Positioniergenauigkeit <= 1° erzielen. Für den Motor der Vorschub-Antriebseinrichtung 34 gilt, dass das Haltemoment bei etwa 0,35 Nm und das Drehmoment bei etwa 2,00 Nm liegt. Es lässt sich auch hier eine Positioniergenauigkeit <= 1° erzielen.

Die Vorrichtung umfasst weiterhin wenigstens eine in den Figuren nicht erkennbare Kamera, über welche eine Probenentnahme auch aus der Entfernung beobachtet sowie aufgezeichnet werden kann.

Die in den Figuren 4 bis 6 dargestellte zweite Ausführungsform einer erfindungsgemäßen Vorrichtung unterscheidet sich von der ersten zunächst dadurch, dass sie den zusätzlichen Gehäuseabschnitt 24 aufweist, andere Füße 6 hat, die keine Magnete jedoch Ausnehmungen 37 für nicht dargestellte Spanngurte aufweisen, und sie eine etwas anders ausgestaltete Hub-Antriebseinrichtung 25 aufweist. Letztere umfasst ein Zahnrad 38, welches über den Motor 26 angetrieben wird und das ein in den Figuren nicht erkennbares Innengewinde aufweist. Dieses übernimmt praktisch die Funktion der Gewindestange 27 aus dem Antrieb der ersten Ausführungsform. Die Stange 28 weist - nur in einem oberen Abschnitt - ein Außengewinde auf und wird - analog zu der Stange 28 der ersten Ausführungsform, heraus- bzw. hereingefahren, wenn das Zahnrad 38 vom Motor 26 angetrieben wird.

Ein weiterer Unterschied der zweiten Ausführungsform besteht darin, dass kein Bedienfeld 9 für eine manuelle Bedienung vorgesehen ist. Die Vorrichtung umfasst vielmehr eine zentrale Steuereinrichtung 39 mit einem Mikroprozessor, die mit den drei Antriebseinrichtungen 19, 25, 34 verbunden ist und die ausgebildet und eingerichtet ist, um vollständig automatisiert eine Probenentnahme durchzuführen.

Es sind darüber hinaus in den Figuren nicht dargestellte Sensoren zur Überwachung eines Probenentnahmeprozesses vorgesehen. Konkret handelt es sich um einen Sensor zur Temperaturerfassung, einen Sensor zur Erfassung der Schallemission sowie Sensoren zur Erfassung Stromaufnahme und/oder Drehzahl der Motoren der drei Antriebseinrichtungen 19, 25, 34. Die Sensoren sind alle mit der Steuereinrichtung 39 verbunden und Messwerte, die im Betrieb mit den Sensoren erfasst werden, werden an die Steuereinrichtung 39 übergeben, welche darauf basierend den jeweiligen Probenentnahmevorgang optimiert steuert.

Schließlich kann die Vorrichtung aus den Figuren 4 bis 6 besonders einfach mit einer in den Figuren nicht dargestellten Absaugeinrichtung verbunden werden, und zwar über den Absauganschluss 40, der seitlich von dem den Bearbeitungsbereich umschließenden Gehäuseabschnitt 24 abragt.

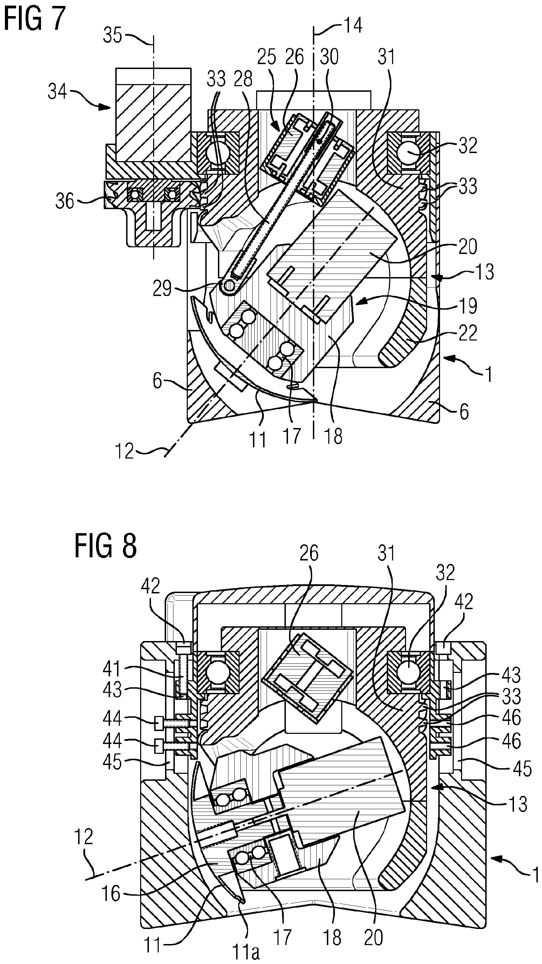

Die Figuren 7 und 8 zeigen eine dritte Ausführungsform einer erfindungsgemäßen Vorrichtung, in perspektivischen, teilweise geschnittenen Darstellungen. Die dritte Ausführungsform unterscheidet sich von der ersten und zweiten vor allem durch eine deutlich andere, kompaktere Gehäuseform. Konkret ist das Gehäuse 1 dieser Vorrichtung eher quader- bzw. würfelförmig und an dieses sind vier Füße 6 unterseitig direkt angeformt, dies in den vier Ecken des Gehäuses 1. Das Gehäuse 1 wird mittels in den Figuren nicht dargestellter Spanngurte vorübergehend an einer gewünschten Position an einem Festkörper fixiert, wofür das Gehäuse 1 in den Figuren nicht erkennbare Führungen für die Spanngurte aufweist. Ein weiterer Unterschied besteht darin, dass die Schnecken-Drehachse 35, um welche die Schnecke 36 der Vorschub-Antriebseinrichtung 34 rotierbar ist, hier nicht horizontal sondern vertikal orientiert ist. Da die Füße 6 bei dieser Ausführungsform Teil des Gehäuses 1 und nicht höhenverstellbar sind, ist der Haltekörper 13 ferner an dem Gehäuse 1 höhenverstellbar gelagert, kann konkret entlang der Vorschubachse 14 linear vor- und zurückbewegt werden, um die Höhe und somit den Abstand des Schneidwerkzeuges 11 zu der Oberfläche eines Festkörpers, an dem die Vorrichtung angeordnet ist, zu ändern.

Schließlich ist, da eine Höhenverstellung des Schneidwerkzeuges 11 hier nicht über die Füße 6 möglich ist, der Haltekörper 13 höhenverstellbar an dem Gehäuse 1 gelagert, wie der Schnittdarstellung aus Figur 8 entnommen werden kann. Konkret ist der Haltekörper über Höhenverstellschrauben 41, von denen in der Figur 8 nur eine beispielhaft gezeigt ist, an dem Gehäuse 1 gehalten. Die Höhenverstellschrauben 41 stützen sich in einem Schraubenaufnahmebereich 42 an dem Gehäuse 1 ab und sind jeweils in ein Gewinde 43 an dem Haltekörper 13 eingeschraubt. Über Betätigung der Höhenverstellschrauben 41 kann die Höhe des Haltekörpers 13 und somit Schneidwerkzeugs 11 gegenüber dem Untergrund verändert werden. Um eine gewünschte Höhenposition zu arretieren sind ferner Fixierschrauben 44 vorgesehen, die sich jeweils durch einen Schlitz 45 in dem Gehäuse 1 erstrecken und in ein Gewinde 46 in dem Haltekörper 13 eingeschraubt sind. Von den Fixierschrauben 46 sind in der Figur 8 nur zwei erkennbar.

Für alle drei der vorstehend beschriebenen Ausführungsbeispiele gilt, dass die jeweilige Vorrichtung zur Entnahme einer Probe aus einem Festkörper, beispielsweise aus dem Gehäuse einer Turbine, bereitgestellt und an der gewünschten Position an dem Festkörper angeordnet und mittels der magnetische Füße 6 und/oder mittels einem oder mehreren in den Figuren nicht gezeigten Spanngurten an dem Festkörper vorübergehend fixiert wird. Anschließend wird mittels des Schneidwerkzeugs 11 eine Probe aus dem Festkörper herausgeschnitten, wobei ein Schnitt mit einer kugelsegmentförmigen Kontur in dem Festkörper hergestellt wird.

Dies ist in den Figuren 9 und 11 - jeweils rein schematisch - dargestellt, in denen die aus dem Festkörper 47 herausgeschnittene Probe 48 bzw. der Schnittbereich 49 skizziert sind.

Unter Verwendung der erfindungsgemäßen Vorrichtung und Durchführung des erfindungsgemäßen Verfahrens können auf einfache und zügige Weise Proben 48 aus etwa metallischen Festkörpern 47 entnommen werden, wobei aufgrund der besonderen Form des Schneidwerkzeuges 11 Gefüge-Veränderungen etwa in Folge thermischer Einwirkung, vermieden bzw. auf einem Minimum gehalten werden können.

Durch die zweiachsige Vorschubbewegung auf einer Kugeloberfläche (Bewegung um Vorschub- 14 und Hubachse 15) kann insbesondere ein gleichbleibendes Spanvolumen über den gesamten Probenquerschnitt bei nahezu vernachlässigbarem Wärmeeintrag in die Probe 47 erhalten werden. Der Wärmeeintrag ist so gering, dass ein Kühlen während des Schneidvorganges nicht zwingend erforderlich ist. Natürlich kann die erfindungsgemäße Vorrichtung jedoch Mittel zum Kühlen umfassen, etwa Mittel zur Zufuhr eines Kühlmediums, um eine etwa vorsorgliche Kühlung durchführen zu können.

Es können repräsentative Festkörperproben 48 erhalten werden, die für eine weitere Analyse und Zustandsbestimmung besonders geeignet sind.

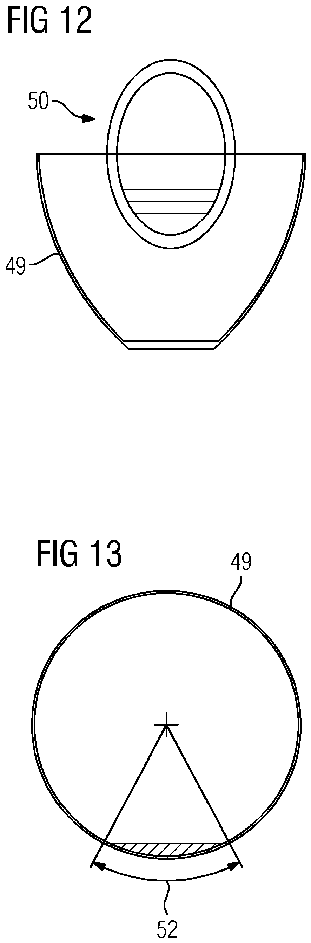

Unter Verwendung eines hohlkugelsegment- oder auch hohlkugelscheibenförmigen Schneidwerkzeuges 11, bzw. eines Schneidwerkezugs zumindest mit einem Abschnitt einer solchen Form, das entlang einer Kugeloberfläche bewegbar gelagert ist, können, wie die Anmelderin festgestellt hat, insbesondere deutlich geeignetere Proben 48 aus einem Festkörper 47 entnommen werden, als es mit einem becherförmigen Schneidwerkzeug 49 (vgl. Figur 12) der Fall ist, welches mit einer nur einachsigen, linearen Vorschubbewegung in einen Festkörper 47 eingetrieben wird, konkret nur um eine Schwenkachse schwenkbar gelagert ist, wodurch ein elliptischer Schnittbereich 50 erhalten wird, wie er in Figur 12 rein schematisch angedeutet ist. Bei dieser Vorgehensweise muss das Schneidwerkzeug 49 deutlich tiefer in den Festkörper 47 eindringen und die Schnittbreite nimmt zur Probenmitte hin zu, nicht ab, wie bei der erfindungsgemäßen Lösung, wie auch in der Figur 9 schematisch dargestellt ist, in welcher der mit dem Schneidwerkzeug 11 hergestellte Schnittbereich 51 in diejenigen ringförmigen Abschnitte unterteilt dargestellt ist, die von außen beginnend nacheinander, jeweils nach Veränderung des Hubs, geschnitten werden können. Selbstverständlich kann alternativ dazu, dass nacheinander ringförmige Bereiche geschnitten werden, der Hub auch gleichzeitig mit der Vorschubbewegung kontinuierlich angepasst werden, wodurch sich ein spiralförmiger Schnittverlauf ergeben würde.

Ein weiterer Vorteil der erfindungsgemäßen Lösung ist, dass der Bereich, über den das Schneidwerkzeug 11 mit dem Festkörper 47 in Eingriff kommt, deutlich geringer ist. Während bei dem becherförmigen Schneidwerkzeug 49 und einachsiger Vorschubbewegung etwa 15% des Schneidwerkzeuges 49 in Eingriff kommen, sind es bei dem hohlkugelsegmentförmigen Schneidwerkzeug 11 gemäß der vorliegenden Erfindung nur etwa 2%. Der Eingriffsbereich 52 ist in den Figuren 10 und 13 jeweils schematisch angedeutet. Der zum Eingriffsbereich 52 gehörige Winkel liegt in Figur 13 bei etwa 56° und in Figur 8 bei etwa 8°.

Obwohl die Erfindung im Detail durch das bevorzugte Ausführungsbeispiel näher illustriert und beschrieben wurde, so ist die Erfindung nicht durch die offenbarten Beispiele eingeschränkt.

## Patentansprüche

1. Vorrichtung zur Entnahme einer Probe (48) aus einem Festkörper (47) durch Herausschneiden, umfassend ein Gestell (1) und ein an dem Gestell (1) relativ zu diesem bewegbar gehaltenes Schneidwerkzeug (11),
wobei das Schneidwerkzeug (11) zumindest abschnittsweise zumindest im Wesentlichen die Form eines Hohlkugelsegmentes oder einer Hohlkugelschicht aufweist und wobei das Schneidwerkzeug (11) um eine Werkzeugdrehachse (12) rotierbar gelagert ist und zur Realisierung einer Hubbewegung um eine Hubachse (15) schwenkbar an dem Gestell (1) gelagert ist, **dadurch gekennzeichnet, dass**
das Schneidwerkzeug (11) zur Realisierung einer Vorschubbewegung um eine in Bezug auf das Gestell (1) bevorzugt ortsfeste Vorschubachse (14) schwenkbar an dem Gestell (1) gelagert ist, wobei die Hubachse (15) zu der Vorschubachse (14) orthogonal ist, und dass für die Rotationsbewegung des Schneidwerkzeugs (11) um die Vorschubachse (14) eine Vorschub-Antriebseinrichtung (34) vorgesehen ist.

2. Vorrichtung nach Anspruch 1,
**dadurch gekennzeichnet, dass**
die Werkzeugdrehachse (12) insbesondere mit derjenigen Achse zusammenfällt, in Bezug auf die das hohlkugelsegment- oder hohlkugelscheibenförmige Schneidwerkzeug (11) bzw. der hohlkugelsegment- oder hohlkugelscheibenförmige Abschnitt des Schneidwerkzeugs (11) rotationssymmetrisch ist.

3. Vorrichtung nach Anspruch 2,
**dadurch gekennzeichnet, dass**
die Anordnung derart getroffen ist, dass das Schneidwerkzeug (11) auf einer Kugeloberfläche bewegbar ist, deren Radius bevorzugt einem zu dem hohlkugelsegment- oder hohlkugelscheibenförmige Schneidwerkzeug (11) bzw. hohlkugelsegment- oder hohlkugelscheibenförmigen Abschnitt des Schneidwerkzeugs (11) gehörigen Kugelradius entspricht.

4. Vorrichtung nach einem der vorhergehenden Ansprüche,
**dadurch gekennzeichnet, dass**
die Hubachse (15) in Bezug auf das Gestell (1) in ihrer Lage veränderbar ist und/oder das Schneidwerkezug (11) höhenverstellbar an dem Gestell (1) gelagert ist.

5. Vorrichtung nach Anspruch 4,
**dadurch gekennzeichnet, dass**
sich die Vorschubachse (14) und die Hubachse (15) in dem zu dem hohlkugelsegment- oder hohlkugelscheibenförmigen Schneidwerkzeug (11) bzw. dem hohlkugelsegment- oder hohlkugelscheibenförmige Abschnitt des Schneidwerkzeuges (11) gehörigen Kugelmittelpunkt schneiden.

6. Vorrichtung nach Anspruch 4 oder 5,
**dadurch gekennzeichnet, dass**
die Vorschub-Antriebseinrichtung (34) einen Schrittmotor und/oder ein Schneckengetriebe aufweist, und/oder für die Schwenkbewegung des Schneidwerkzeugs (11) um die Hubachse (15) eine Hub-Antriebseinrichtung (25) insbesondere mit einem bevorzugt einen Schrittmotor (26) umfassenden Linearantrieb und/oder einem Planetengetriebe vorgesehen ist,
wobei die Hub-Antriebseinrichtung (25) insbesondere ein linear herein- und herausfahrbares Stellelement (28) umfasst, das gelenkig mit einem das Schneidwerkzeug (11) tragenden Werkzeughalter (16) verbunden ist, und das Stellelement bevorzugt um eine Hub-Antriebsschwenkachse (30) schwenkbar gelagert ist.

7. Vorrichtung nach einem der Ansprüche 4 bis 6,
**dadurch gekennzeichnet, dass**
das Schneidwerkzeug (11) an einem Haltekörper (13) bewegbar gehalten ist,
wobei der Haltekörper (13) zur Realisierung der Vorschubbewegung um die Vorschubachse (14) rotierbar an dem Gestell (1) gelagert ist, und/oder das Schneidwerkzeug (11) an dem Haltekörper (13) um die Hubachse (15) schwenkbar gelagert ist, und/oder der Haltekörper (13) an dem Gestell (1) höhenverstellbar gelagert ist.

8. Vorrichtung nach Anspruch 7,
**dadurch gekennzeichnet, dass**
der Haltekörper (13) einen bevorzugt zumindest im Wesentlichen zylinderförmigen Antriebsabschnitt (31) aufweist, der um seine zentrale Längsachse (14) drehbar an dem Gestell (1) gehalten und/oder außenseitig mit Zähnen (33) versehen ist, von denen einige mit einer an dem Gestell (1) um ihre Längsachse (35) rotierbar gelagerten, motorisiert antreibbaren Schnecke (36) in Eingriff stehen, und/oder dass der Haltekörper (13) einen Aufnahmeabschnitt (22) umfasst, der sich zumindest abschnittsweise durch eine kugelförmige Außen- und/oder Innenkontur auszeichnet und in dem insbesondere ein das Schneidwerkzeug (11) tragender Werkzeughalter (16) und/oder ein Antrieb für die Rotationsbewegung des Schneidwerkzeugs (11) um die Werkzeugdrehachse (12) angeordnet ist,
wobei der Aufnahmeabschnitt (22) bevorzugt eine Öffnung aufweist und das Schneidwerkzeug (11) im Bereich der Öffnung angeordnet ist.

9. Vorrichtung nach einem der vorhergehenden Ansprüche,
**dadurch gekennzeichnet, dass**
für die Rotationsbewegung des Schneidwerkzeuges (11) um die Werkzeugdrehachse (12) eine Dreh-Antriebseinrichtung (19) mit einem bürstenlosen Gleichstrommotor (20) vorgesehen ist.

10. Vorrichtung nach einem der vorhergehenden Ansprüche,
**dadurch gekennzeichnet, dass**
zur vorübergehenden Fixierung der Vorrichtung an einem Festkörper, aus dem eine Probe zu entnehmen ist, Füße (6) vorgesehen sind, die insbesondere ein- und ausschaltbare Magnete und/oder Aufnahmen für Spanngurte umfassen, wobei die Füße (6) bevorzugt gelenkig, insbesondere über Radial-Gelenklager (5) mit dem Gestell (1) verbunden sind, und/oder die Füße (6) zur Höhenverstellung herein- und herausdrehbar an dem Gestell (1) befestigt sind.

11. Vorrichtung nach einem der vorhergehenden Ansprüche,
**dadurch gekennzeichnet, dass**
ein einseitig offenes Gehäuse (1) und/oder eine Absaugeinrichtung vorgesehen ist.

12. Vorrichtung nach einem der vorhergehenden Ansprüche,
**dadurch gekennzeichnet, dass**
eine Steuereinrichtung (39) vorgesehen ist, die bevorzugt wenigstens einen Mikroprozessor umfasst und insbesondere mit einem Antrieb für die Rotationsbewegung des Schneidwerkzeugs (11) um die Werkzeugdrehachse (12) und/oder einem Antrieb für die Schwenkbewegung des Schneidwerkzeugs (11) um die Hubachse (15) und/oder einem Antrieb für die Rotationsbewegung des Haltekörpers (13) um die Vorschubachse (14) verbunden ist.

13. Vorrichtung nach Anspruch 12,
**dadurch gekennzeichnet, dass**
die Steuereinrichtung (39) ausgebildet und eingerichtet ist, um eine Probe automatisiert aus einem Festkörper herauszuschneiden.

14. Vorrichtung nach einem der vorhergehenden Ansprüche,
**dadurch gekennzeichnet, dass**
wenigstens ein Encoder vorgesehen ist, der ausgebildet und angeordnet ist, um die aktuelle Position des Schneidwerkzeuges (11) zu erfassen, und/oder dass wenigsten ein Sensor vorgesehen ist, der bevorzugt ausgebildet und angeordnet ist, um die Außentemperatur oder den Zustand eines vorhandenen Antriebes zu überwachen, und/oder wenigstens eine Kamera vorgesehen ist, die ausgebildet und angeordnet ist, um eine Probenentnahme aufzeichnen zu können.

15. Verfahren zur Entnahme einer Probe aus einem Festkörper durch Herausschneiden,
bei dem
- eine Vorrichtung nach einem der vorhergehenden Ansprüche bereitgestellt wird,
- die Vorrichtung an geeigneter Stelle des Festkörpers angeordnet und insbesondere vorrübergehend fixiert wird, und
- mittels des Schneidwerkzeugs (11) eine Probe aus dem Festkörper entnommen wird, wobei ein Schnitt mit einer kugelsegmentförmigen Kontur in dem Festkörper hergestellt wird.

16. Verwendung einer Vorrichtung nach einem der Ansprüche 1 bis 14 zur Entnahme einer Probe aus einem Festkörper durch Herausschneiden.

## Claims

1. Device for taking a sample (48) from a solid body (47) by cutting it out, comprising a frame (1) and a cutting tool (11) held on the frame (1) so as to be movable relative to the frame,
wherein the cutting tool (11), at least in parts, at least substantially has the shape of a hollow spherical segment or of a hollow spherical layer, and wherein the cutting tool (11) is mounted so as to be rotatable about a tool axis of rotation (12) and is mounted pivotably on the frame (1) in order to carry out a stroke movement about a stroke axis (15), **characterized in that**,
in order to carry out a feed movement about a feed axis (14) that is preferably stationary in relation to the frame (1), the cutting tool (11) is mounted pivotably on the frame (1), wherein the stroke axis (15) is orthogonal to the feed axis (14), and **in that**, for the rotational movement of the cutting tool (11) about the feed axis (14), a feed drive unit (34) is provided.

2. Device according to Claim 1,
**characterized in that**
the tool axis of rotation (12) coincides in particular with that axis which is rotationally symmetrical in relation to the hollow spherical segment-shaped or hollow spherical disc-shaped cutting tool (11) or to the hollow spherical segment-shaped or hollow spherical disc-shaped portion of the cutting tool (11).

3. Device according to Claim 2,
**characterized in that**
the arrangement is made in such a way that the cutting tool (11) is movable on a spherical surface, the radius of which corresponds preferably to a spherical radius that belongs to the hollow spherical segment-shaped or hollow spherical disc-shaped cutting tool (11) or hollow spherical segment-shaped or hollow spherical disc-shaped portion of the cutting tool (11).

4. Device according to one of the preceding claims, **characterized in that**
the stroke axis (15) is variable in its position relative to the frame (1) and/or the cutting tool (11) is mounted on the frame (1) so as to be vertically adjustable.

5. Device according to Claim 4,
**characterized in that**
the feed axis (14) and the stroke axis (15) intersect at the sphere centre belonging to the hollow spherical segment-shaped or hollow spherical disc-shaped cutting tool (11) or the hollow spherical segment-shaped or hollow spherical disc-shaped portion of the cutting tool (11).

6. Device according to Claim 4 or 5,
**characterized in that**
the feed drive unit (34) has a stepping motor and/or a worm gear mechanism, and/or, for the pivoting movement of the cutting tool (11) about the stroke axis (15), a stroke drive unit (25), in particular having a linear drive comprising preferably a stepping motor (26), and/or a planetary gear mechanism is provided,
wherein the stroke drive unit (25) comprises in particular an actuating element (28) which is movable linearly in and out and is connected in an articulated manner to a tool holder (16) carrying the cutting tool (11), and the actuating element is mounted preferably so as to be pivotable about a stroke drive pivot axis (30).

7. Device according to one of Claims 4 to 6,
**characterized in that**
the cutting device (11) is held movably on a holding body (13),
wherein, in order to implement the feed movement about the feed axis (14), the holding body (13) is mounted rotatably on the frame (1), and/or the cutting tool (11) is mounted on the holding body (13) so as to be pivotable about the stroke axis (15), and/or the holding body (13) is mounted on the frame (1) so as to be vertically adjustable.

8. Device according to Claim 7,
**characterized in that**
the holding body (13) has a preferably at least substantially cylindrical drive portion (31) which is mounted on the frame (1) so as to be rotatable about its central longitudinal axis (14), and/or is provided externally with teeth (33), some of which mesh with a motor-drivable worm (36) mounted on the frame (1) so as to be rotatable about its longitudinal axis (35), and/or **in that** the holding body (13) comprises a receiving portion (22) which is at least partly distinguished by a spherical outer and/or inner contour and in which, in particular, a tool holder (16) carrying the cutting tool (11) and/or a drive for the rotational movement of the cutting tool (11) about the tool axis of rotation (12) is arranged,
wherein the receiving portion (22) has preferably an opening and the cutting tool (11) is arranged in the region of the opening.

9. Device according to one of the preceding claims, **characterized in that**,
for the rotational movement of the cutting tool (11) about the tool axis of rotation (12), a rotary drive unit (19) having a brushless DC motor (20) is provided.

10. Device according to one of the preceding claims, **characterized in that**,
to temporarily fix the device to a solid body from which a sample is to be taken, feet (6) are provided, which comprise in particular magnets that are able to be switched on and off and/or receptacles for tension belts,
wherein the feet (6) are connected to the frame (1), preferably in an articulated manner, in particular via radial joint bearings (5), and/or the feet (6) are fixed to the frame (1) so as to be rotatable in and out for vertical adjustment.

11. Device according to one of the preceding claims, **characterized in that**
a housing (1) that is open on one side and/or a suction unit is provided.

12. Device according to one of the preceding claims, **characterized in that**
a control unit (39) is provided, which comprises preferably at least one microprocessor and is connected in particular to a drive for the rotational movement of the cutting tool (11) about the tool axis of rotation (12) and/or to a drive for the pivoting movement of the cutting tool (11) about the stroke axis (15) and/or a drive for the rotational movement of the holding body (13) about the feed axis (14).

13. Device according to Claim 12,
**characterized in that**
the control unit (39) is designed and configured to cut a sample automatically out of a solid body.

14. Device according to one of the preceding claims, **characterized in that**
at least one encoder is provided, which is designed and arranged in order to detect the current position of the cutting tool (11), and/or **in that** at least one sensor is provided, which is preferably designed and arranged in order to monitor the external temperature or the condition of a drive that is present, and/or at least one camera is provided, which is designed and arranged in order for it to be possible to record the taking of a sample.

15. Method for taking a sample from a solid body by cutting it out,
in which
- a device according to one of the preceding claims is provided,
- the device is arranged at a suitable point of the solid body and in particular is temporarily fixed, and,
- by means of the cutting tool (11), a sample is taken from the solid body, wherein a cut having a spherical segment-shaped contour is produced in the solid body.

16. Use of a device according to one of Claims 1 to 14 to take a sample from a solid body by cutting it out.

## Revendications

1. Dispositif de prélèvement d'un échantillon (48) d'un corps (47) solide par coupe, comprenant un bâti (1) et un outil (11) de coupe retenu sur le bâti (1) en pouvant se déplacer par rapport à celui-ci,
dans lequel l'outil (11) de coupe a, au moins par endroits, au moins sensiblement la forme d'un segment de sphère creuse ou d'une zone de sphère creuse, et dans lequel l'outil (11) de coupe est monté tournant autour d'un axe (12) de rotation d'outil et, pour la réalisation d'un mouvement de levé, est monté sur le bâti (1) pivotant autour d'un axe (15) de levé,
**caractérisé en ce que**
l'outil (11) de coupe est, pour la réalisation d'un mouvement d'avance, monté pivotant sur le bâti (1) autour d'un axe (14) d'avance, de préférence fixe en position par rapport au bâti (1), dans lequel l'axe (15) de levé est orthogonal à l'axe (14) d'avance, et **en ce qu'**il est prévu un dispositif (34) d'entraînement d'avance, pour le mouvement de rotation de l'outil (11) de coupe autour de l'axe (14) d'avance.

2. Dispositif suivant la revendication 1,
**caractérisé en ce que**
l'axe (12) de rotation de l'outil coïncide notamment avec l'axe par rapport auquel l'outil (11) de coupe en forme de segment de sphère creuse ou de zone de sphère creuse ou la partie en forme de segment de creuse ou en forme de zone de sphère creuse de l'outil (11) est de révolution.

3. Dispositif suivant la revendication 2,
**caractérisé en ce que**
l'agencement est tel que l'outil (11) de coupe peut se déplacer sur une surface sphérique, dont le rayon correspond, de préférence à un rayon sphérique appartenant à l'outil (11) de coupe en forme de segment de sphère creuse ou en forme de zone de sphère creuse ou à la partie en forme de segment de sphère creuse ou en forme de zone de sphère creuse de l'outil (11) de coupe.

4. Dispositif suivant l'une des revendications précédentes, **caractérisé en ce que**
l'axe (15) de levé peut être modifié dans sa position par rapport au bâti (1) et/ou l'outil (11) de coupe est monté réglable en hauteur sur le bâti (1).

5. Dispositif suivant la revendication 4,
**caractérisé en ce que**
l'axe (14) d'avance et l'axe (15) de levé se coupent au centre de la sphère appartenant à l'outil (11) de coupe en forme de segment de sphère creuse ou en forme de zone de sphère creuse ou à la partie en forme de segment de sphère creuse ou en forme de zone de sphère creuse de l'outil (11) de coupe.

6. Dispositif suivant la revendication 4 ou 5,
**caractérisé en ce que**
le dispositif (34) d'entraînement d'avance a un moteur pas à pas et/ou un engrenage à vis sans fin et/ou il est prévu, pour le mouvement de pivotement de l'outil (11) de coupe autour de l'axe (15) de levé, un dispositif (25) d'entraînement de levé ayant notamment un entraînement linéaire, comprenant de préférence un moteur (26) pas à pas et/ou un engrenage épicycloïdal,
dans lequel le dispositif (25) d'entraînement de levé comprend notamment un élément (28) de réglage linéaire pouvant entrer et sortir, qui est articulé à un porte-outil (16) portant l'outil (11) de coupe et **en ce que** l'élément de réglage est monté pivotant de préférence autour d'un axe (30) de pivotement d'entraînement de levage.

7. Dispositif suivant l'une des revendications 4 à 6, **caractérisé en ce que**
l'outil (11) de coupe est retenu avec possibilité de se déplacer sur un corps (13) de retenue,
dans lequel le corps (13) de retenue est, pour la réalisation du mouvement d'avance, monté sur le bâti (1) tournant autour de l'axe (14) d'avance et/ou l'outil (11) de coupe est monté pivotant autour de l'axe (15) de levé sur le corps (13) de retenue et/ou le corps (13) de maintien est monté réglable en hauteur sur le bâti (1).

8. Dispositif suivant la revendication 7,
**caractérisé en ce que**
le corps (13) de maintien à une partie (31) d'entraînement, de préférence au moins sensiblement en forme de cylindre, qui en pouvant tourner autour de son axe (14) longitudinal central est retenue sur le bâti (1) et/ou est pourvue de dents (33) du côté extérieur, dont certaines engrènent avec une vis (36) pouvant être entraînée par un monteur et montée tournante sur le bâti (1) autour de son axe (35) longitudinal et/ou **en ce que** le corps (13) de retenue comprend une partie (22) de réception, qui se caractérise, au moins par endroits, par un contour extérieur et/ou intérieur sphérique et dans lequel est disposé notamment un porte-outil (16) portant l'outil (11) de coupe et/ou un entraînement pour le mouvement de rotation de l'outil (11) de coupe autour de l'axe (12) de rotation de l'outil,
dans lequel la partie (22) de réception a de préférence une ouverture et l'outil (11) de coupe est disposé dans la partie de l'ouverture.

9. Dispositif suivant l'une des revendications précédentes, **caractérisé en ce qu'**
un dispositif (19) d'entraînement en rotation ayant un moteur (20) à courant continu sans balai est prévu pour le mouvement de rotation de l'outil (11) de coupe autour de l'axe (12) de rotation de l'outil.

10. Dispositif suivant l'une des revendications précédentes, **caractérisé en ce que**
pour l'immobilisation transitoire du dispositif sur un corps fixe, dont on doit prélever un échantillon, il est prévu des pieds (6), qui comprennent notamment un aimant pouvant être mis sous tension et hors tension et/ou des logements de sangle de tension, dans lequel les pieds (6) sont reliés, en étant de préférence articulés, notamment par des articulations (5) à rotule radiale au bâti (1) et/ou les pieds (6) sont, pour le réglage en hauteur, fixés au bâti (1), de manière à pouvoir tourner en entrant et en sortant.

11. Dispositif suivant l'une des revendications précédentes, **caractérisé en ce que**
il est prévu un capotage (1) ouvert d'un côté et/ou un dispositif d'aspiration.

12. Dispositif suivant l'une des revendications précédentes, **caractérisé en ce que**
il est prévu un dispositif (39) de commande, qui comprend de préférence au moins un microprocesseur et qui est relié, notamment à un entraînement pour le mouvement en rotation de l'outil (11) de coupe autour de l'axe (12) de rotation de l'outil et/ou à un entraînement pour le mouvement de pivotement de l'outil (11) de coupe autour de l'axe (15) de levé et/ou un entraînement pour le mouvement en rotation du corps (13) de retenue autour de l'axe (14) d'avance.

13. Dispositif suivant la revendication 12,
**caractérisé en ce que**
le dispositif (39) de commande est constitué et conçu pour couper un échantillon d'une manière automatisée d'un corps solide.

14. Dispositif suivant l'une des revendications précédentes, **caractérisé en ce que**
il est prévu au moins un codeur, qui est constitué et disposé pour relever la position en cours de l'outil (11) de coupe et/ou **en ce qu'**il est prévu au moins un capteur, qui est constitué et disposé, de préférence pour contrôler la température extérieure ou l'état d'un entraînement existant et/ou il est prévu un appareil photographique, qui est constitué et disposé pour pouvoir enregistrer un prélèvement d'échantillon.

15. Procédé de prélèvement d'un échantillon d'un corps solide par coupe,
dans lequel
- on se procure un dispositif suivant l'une des revendications précédentes,
- on met le dispositif en un emplacement approprié du corps solide et notamment on l'immobilise transitoirement, et
- au moyen de l'outil (11) de coupe, on prélève un échantillon du corps solide, une coupe ayant un contour en forme de segment de sphère étant produite dans le corps solide.

16. Utilisation d'un dispositif suivant l'une des revendications 1 à 14 pour le prélèvement d'un échantillon d'un corps solide par coupe.
